(19) Europäisches Patentamt
European Patent Office
Office européen des brevets

(11) EP 4 491 656 A1

(12) EUROPEAN PATENT APPLICATION
published in accordance with Art. 153(4) EPC

(43) Date of publication:
**15.01.2025 Bulletin 2025/03**

(21) Application number: **23766784.5**

(22) Date of filing: **06.03.2023**

(51) International Patent Classification (IPC):
***C08G 65/333*** *(2006.01)*

(52) Cooperative Patent Classification (CPC):
**C08G 65/329; C08G 65/333**

(86) International application number:
**PCT/JP2023/008303**

(87) International publication number:
**WO 2023/171608 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.03.2022 JP 2022035886**

(71) Applicant: **NOF Corporation**
**Shibuya-ku**
**Tokyo 150-6019 (JP)**

(72) Inventors:
- **HAMURA Ken**
**Kawasaki-shi, Kanagawa 210-0865 (JP)**
- **KAMIYA Masaki**
**Kawasaki-shi, Kanagawa 210-0865 (JP)**

(74) Representative: **Hoffmann Eitle**
**Patent- und Rechtsanwälte PartmbB**
**Arabellastraße 30**
**81925 München (DE)**

# (54) METHOD FOR PRODUCING POLYOXYETHYLENE DERIVATIVE, METHOD FOR QUANTITATING POLYOXYETHYLENE COMPOUND, AND LABELING REAGENT FOR ANALYSIS USE

(57) A high-molecular-weight polyoxyethylene compound having an unreacted hydroxy group is labeled in a deuterated solvent using a labeling reagent, and then quantification is performed using a solution obtained after the labeling by proton magnetic resonance spectroscopy employing a presaturation method and an inversed decoupling method. In this manner, a high-molecular-weight polyoxyethylene derivative is produced using a high-molecular-weight polyoxyethylene compound having a hydroxy group as a starting material by derivatizing the hydroxy group. In the production, it becomes possible to quantify a high-molecular-weight polyoxyethylene compound having an unreacted hydroxy group rapidly and with high accuracy.

EP 4 491 656 A1

## Description

TECHNICAL FIELD

The present invention relates to a method for producing a polyoxyethylene derivative, a method for quantitating a polyoxyethylene compound, and a labeling reagent for analysis use.

BACKGROUND ART

When a pharmaceutical that uses bio-related substances such as hormones, cytokines, and enzymes is administered into a general living body, it is promptly excreted from the living body through glomerular filtration in the kidneys and uptake by macrophages in the liver or spleen. Therefore, the half-life in the blood is short, and it is often difficult to obtain a sufficient pharmacological effect. In order to solve this problem, attempts have been made to chemically modify the bio-related substances with water-soluble polymers such as polyoxyethylene (PEG). As a result, it is possible to extend the half-life in the blood of the bio-related substances by increasing the molecular weight and forming a hydration layer. It is also well known that these modifications can produce effects such as reduction in toxicity and antigenicity of the bio-related substances, improvement in aggregation properties, and the like.

A structure of a PEG derivative generally has, at a polyoxyethylene end, an active group that chemically bonds to a functional group such as an amino group, a mercapto group, a carboxy group, or an unsaturated bond present on the surface of a protein to be modified. For example, the PEG end includes active groups such as a formyl group, an epoxy group, a p-nitrophenyl ester group, and a N-hydroxysuccinimidyl ester group in the case of modifying an amino group, active groups such as a mercapto group, a maleimidyl group, a substituted maleimidyl group, an allyl group, and a N-hydroxysuccinimidyl ester group in the case of modifying a mercapto group, active groups such as a mercapto group and an amino group in the case of modifying a carboxy group, and active groups such as a mercapto group in the case of modifying an unsaturated bond.

However, particularly in the case of modifying a low molecular weight drug or peptide, there is a problem that it is difficult to obtain effects such as improvement in solubility since there are few reactive functional groups to be bonded to the PEG derivative. In addition, in the case of modification with a large number of PEG derivatives, there is a problem that active sites of the drug or peptide is blocked, making it impossible for the drug or peptide to fully express the own functions and medicinal efficacy. Therefore, in recent years, PEG derivatives having a higher molecular weight have been used in order to efficiently obtain the effect even with the minimum number of modifications without reducing the function or medicinal efficacy of a physiologically active substance.

PEG derivatives having active groups (activated PEG derivatives) intended for these medical uses are required to have few impurities from the viewpoint of the performance and safety of drugs produced by modifying the PEG derivatives, and further, impurities produced as by-products during the production process and remaining raw materials and intermediates are required to be appropriately managed. For example, in the pharmaceutical industry where batch production is the mainstream, in some cases, tests are carried out at any process of the production to determine the amount of the remaining raw materials, the impurities produced as by-products, or the like, the process is temporarily put on standby during the test, and after finding that the test has passed, the process proceeds to the next process.

Currently, the activated PEG derivatives having various backbones such as linear and branched structures are being developed, and the amount of the impurities produced as by-products varies depending on a production method. The activated PEG derivatives are generally produced by using a hydroxy group-containing PEG compound (PEG-OH) as a raw material or intermediate through a derivatization process such as modification of the hydroxy group or bonding to an active group. Therefore, when the hydroxy group is insufficiently derivatized, the PEG-OH remains as a trace component in the PEG derivative having a derivatized hydroxy group obtained during the production process or in the activated PEG derivative as a final product.

In addition, the PEG-OH remaining as a trace component becomes an impurity other than the target compound in the production process of the activated PEG derivative, leading to a decrease in purity in some cases.

Therefore, there is a need for a production method that can highly sensitively quantitate and appropriately manage the amount of the unreacted PEG-OH remaining in trace amount in the PEG derivative after derivatization in a hydroxy group derivatization process.

In particular, as demand for a high molecular weight PEG derivative has increased in recent years, in the process of derivatizing the hydroxy group in the high molecular weight PEG-OH, a production method in which the amount of the high molecular weight PEG-OH remaining in trace amount in the high molecular weight PEG derivative after derivatization is quantitated with high sensitivity and appropriately managed is important for improving the purity of the high molecular weight PEG derivative.

Appropriate management here means that the amount of the high molecular weight PEG-OH remaining in trace amount in the derivatization process is quantitated with high sensitivity, it is found, based on analysis results, that quality

characteristics such as an introduction rate of active groups into the high molecular weight PEG derivative after derivatization are not influenced, and a specified process such as a reaction or purification process is completed and is moved on to a next process, and means that appropriate measures such as extending of a reaction time or addition of a purification process are taken when the quality characteristics are influenced.

Further, in the case of appropriately managing the amount of the high molecular weight PEG-OH remaining in trace amount, it is necessary to promptly complete the specified process and move on to the next process from the viewpoint of product stability and productivity. Therefore, the highly sensitive quantitation method used is also required to have simplicity and promptness. For example, when it takes time to quantitate the high molecular weight PEG-OH, a specified process cannot be completed, resulting in an increase in production time and leading to product deterioration during the process in some cases.

Examples of a method for quantitating the PEG-OH include a titration method such as a neutralization titration method, a potentiometric titration method, and a pyridine-acetyl chloride method. However, these quantitation methods are generally analysis techniques when the PEG-OH is a main component. In addition, the greater an analytical error and the greater the molecular weight of an analytical sample, the greater the influence of the error. Therefore, it is not suitable as a highly sensitive method for quantitating a trace amount of an unreacted high molecular weight PEG-OH contained in the high molecular weight PEG derivative after derivatization.

In addition, a nuclear magnetic resonance spectroscopy (NMR method) is known as analysis means for highly sensitively quantitating a high molecular weight PEG-OH contained in a high molecular weight PEG derivative (see, for example, Patent Literature 1).

Examples of a simpler NMR method includes a method of labeling a PEG-OH in an aprotic deuterated solvent using an isocyanate reagent such as trichloroacetyl isocyanate as a labeling reagent, and then performing $^{1}$H-NMR measurement (see, non-Patent Literature 1).

## PRIOR ARTS

### NON-PATENT LITERATURE

Non-Patent Literature 1: "A simple method for determining protic end-groups of synthetic polymers by 1H NMR spectroscopy", Almar Postma et. al., "Polymer" 47 (2006) pages 1899-1911

### PATENT LITERATURE

Patent Literature 1: JP4412461B

## SUMMARY OF INVENTION

### PROBLEM TO BE SOLVEDE BY THE INVENTION

In Patent Literature 1, methanesulfonyl chloride is used as a labeling reagent, and it is possible to label an unreacted high molecular weight PEG-OH remaining in trace amount and to quantitate the same by $^{1}$H-NMR analysis. However, the configuration of Patent Literature 1 requires a purification operation after labeling, and there is a problem that it lacks the simplicity and the promptness required for in-process management.

In addition, with the NMR method described in Non-Patent Literature 1, it is possible to quantitate the PEG-OH when it is a main component. However, in the case of quantitating an unreacted PEG-OH present as a trace component contained in a high molecular weight PEG derivative having derivatized a hydroxy group, the multiplet of a proton peak in a PEG chain becomes larger, causing an increase in noise and distortion of a baseline, and an S/N ratio of the peak derived from the labeled PEG-OH becomes small, increasing the measurement error, which cause a problem in quantitating property.

In this regard, as a method of increasing the S/N ratio of a target peak in the NMR method, generally, there is known a method of increasing a sample concentration or increasing the number of integrations during NMR measurement, or applying a pre-saturation method to huge peaks other than the target peak.

However, it is known that when the sample concentration of the high molecular weight PEG derivative is increased, the viscosity of a sample solution increases, the spectral width of the target peak increases, and the measurement error increases. In addition, the pre-saturation method is known to influence the peak intensity around the huge peak to which it is applied, and influences the quantitating property in some cases.

The present invention has been made in view of the above problems, and is to shorten a production time and enable appropriate management of a high molecular weight PEG-OH by simply, promptly, and highly sensitively quantitating an amount of an unreacted high molecular weight PEG-OH contained in a high molecular weight PEG

derivative after derivatization in a process of derivatizing a hydroxy group in the high molecular weight PEG-OH.

MEANS FOR SOLVING THE PROBLEM

As described above, in Patent Literature 1, since a proton peak derived from the labeling reagent overlaps the proton peak derived from the labeled high molecular weight PEG-OH, and peak separation is insufficient, a purification operation is required after labeling, and there is a problem that it lacks the promptness required for in-process management. In this regard, the method described in Non-Patent Literature 1 allows peak separation of the proton peaks derived from the labeling reagent and the labeled PEG-OH. However, as a method for quantitating the high molecular weight PEG-OH contained in the high molecular weight PEG derivative, there is a problem in quantitating property.

Further, there is a problem in quantitating the high molecular weight PEG-OH contained in trace amount in the high molecular weight PEG derivative using the $^{1}$H-NMR method in the related art, and no method has been provided for producing a high molecular weight PEG derivative in which the amount of the unreacted high molecular weight PEG-OH in trace amount can be subjected to in-process management using the $^{1}$H-NMR method.

As a result of intensive studies, the inventors of the present invention have found a method for producing a high molecular weight PEG derivative that can shorten the production time and a labeling reagent for a high molecular weight PEG-OH by using an analysis method that has both promptness and quantitating property and that allows the amount of the PEG-OH to be appropriately managed in a process of derivatizing a hydroxy group in which an unreacted high molecular weight PEG-OH remaining in trace amount in a high molecular weight PEG derivative having a derivatized hydroxy group is labeled using a labeling reagent in a deuterated solvent, and a labeled solution is promptly and highly sensitively quantitated using a pre-saturation method and a $^{1}$H-NMR method using inverse gated decoupling.

That is, the present invention relates to the following (1) to (6).

(1) A method for producing a high molecular weight polyoxyethylene derivative having a derivatized hydroxy group by derivatizing a hydroxy group in a high molecular weight polyoxyethylene compound having the hydroxy group, the method including:

labeling the high molecular weight polyoxyethylene compound having the hydroxy group, which is unreacted, using a labeling reagent in a deuterated solvent; and
quantitating a labeled solution by a pre-saturation method and a proton nuclear magnetic resonance spectroscopy using inverse gated decoupling.

(2) The method according to (1), in which the high molecular weight polyoxyethylene compound having the hydroxy group is represented by the following formula (1).

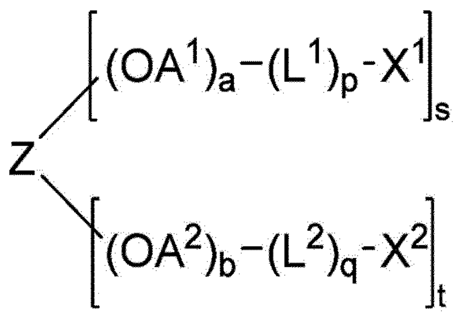

• • • (1)

(In the formula (1),

$OA^1$ and $OA^2$ are an oxyethylene group,
a and b are each independently 0 to 2,500, and a+b is 200 or more,
$L^1$ and $L^2$ are each independently an alkylene group which may have a bond selected from an ester bond, a urethane bond, an amide bond, a urea bond, an ether bond, and a thioether bond in an alkylene chain or at an end thereof, and the alkylene groups may be same as or different from each other in one molecule,
p and q are each independently 0 or 1,
s and t are each independently 0 to 8, and $2 \leq s+t \leq 8$,
$X^1$ is a hydroxy group, an alkoxy group, an azide group, an oxycarbonyl group, an oxycarbonyloxy group, an oxycarbamoyl group, a cyano group, a silyl group, an acyloxy group, a sulfonyl group, or an imido group, and when

t is 0, $X^1$ is a hydroxy group,
$X^2$ is a hydroxy group, and
Z is a residue obtained by removing all hydroxy groups from a compound having 2 to 8 hydroxy groups and 2 to 21 carbon atoms.)

(3) The method according to (1) or (2), in which the high molecular weight polyoxyethylene derivative having a derivatized hydroxy group is represented by the following formula (2).

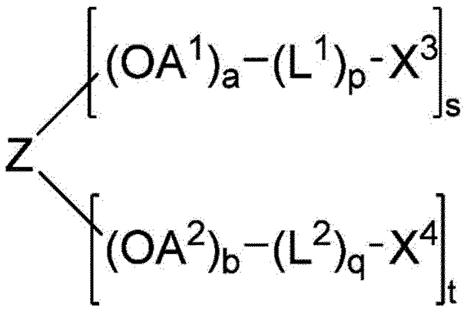

· · · (2)

(In the formula (2),

$OA^1$ and $OA^2$ are an oxyethylene group,
a and b are each independently 0 to 2,500, and a+b is 200 or more,
$L^1$ and $L^2$ are each independently an alkylene group which may have a bond selected from an ester bond, a urethane bond, an amide bond, a urea bond, an ether bond, and a thioether bond in an alkylene chain or at an end thereof, and the alkylene groups may be same as or different from each other in one molecule,
p and q are each independently 0 or 1,
s and t are each independently 0 to 8, and $2 \leq s+t \leq 8$,
$X^3$ and $X^4$ are each independently an alkoxy group, an azide group, an oxycarbonyl group, an oxycarbonyloxy group, an oxycarbamoyl group, a cyano group, a silyl group, an acyloxy group, a sulfonyl group, or an imido group, and
Z is a residue obtained by removing all hydroxy groups from a compound having 2 to 8 hydroxy groups and 2 to 21 carbon atoms.)

(4) The method according to any one of (1) to (3), in which the labeling reagent is an isocyanate reagent represented by the following formula (3).

$$R\text{-}N{=}C{=}O \qquad (3)$$

(In the formula (3), R represents an organic group having an electron-withdrawing group.)
(5) A labeling reagent for analysis use for a high molecular weight polyoxyethylene compound having a hydroxy group, which is represented by a formula (3).

$$R\text{-}N{=}C{=}O \qquad (3)$$

(In the formula (3), R represents an organic group having an electron-withdrawing group.)
(6) A method for quantitating a high molecular weight polyoxyethylene compound having a hydroxy group contained in a high molecular weight polyoxyethylene derivative, the method including:

labeling the high molecular weight polyoxyethylene compound having a hydroxy group using a labeling reagent in a deuterated solvent; and
quantitating a labeled solution by a pre-saturation method and a proton nuclear magnetic resonance spectroscopy using inverse gated decoupling.

EFFECTS OF INVENTION

According to the present invention, in a process of derivatizing a high molecular weight PEG compound having a

hydroxy group, when an amount of an unreacted high molecular weight PEG-OH remaining in trace amount is promptly and highly sensitively quantitated using a $^1$H-NMR method, it is possible to appropriately manage the production process, shorten the production time, and provide a high molecular weight end-activated PEG derivative having a high purity.

EMBODIMENTS FOR CARRYING OUT THE INVENTION

Hereinafter, a method for producing a high molecular weight polyoxyethylene derivative having a derivatized hydroxy group, a method for quantitating a high molecular weight polyoxyethylene compound having a hydroxy group, and a labeling reagent for analysis use for a high molecular weight polyoxyethylene compound having a hydroxy group according to the present invention will be described in detail.

A process of derivatizing a hydroxy group in a high molecular weight polyoxyethylene compound having a hydroxy group (may be abbreviated as a "high molecular weight PEG-OH" in the present description) (producing a high molecular weight polyoxyethylene derivative) refers to a series of production processes to obtain a target high molecular weight polyoxyethylene derivative after derivatization (may be abbreviated as a "high molecular weight PEG derivative" in the present description), which includes reaction processes including a multi-stage reaction by one-pot synthesis and a purification process, using a high molecular weight PEG-OH as a raw material. As long as the high molecular weight PEG-OH is used as a raw material, there is no restriction on the number of reaction stages in the one-pot synthesis, and two stages are preferred.

Examples of a reaction for derivatizing the hydroxy group in the high molecular weight PEG-OH include esterification, etherification, mesylation, cyanoethylation, and silylation. Specific examples of the one-pot synthesis include the following.

- ·A two-stage reaction in which a hydroxy group is mesylated with methanesulfonyl chloride, and then sodium methoxide is spiked to the same reaction system to form a methoxy group.
- ·A two-stage reaction in which a hydroxy group is replaced with a phthalimide group and then deprotected with hydrazine or the like to form an amino group.
- ·A reaction in which a hydroxy group is reacted with a carboxylic anhydride under basic conditions, esterified to form a carboxylic acid form, and then N-hydroxysuccinimide is added to the same reaction system to introduce an active group.

In the present invention, in labeling an unreacted high molecular weight PEG-OH in a high molecular weight PEG derivative, there are no particular restriction on a deuterated solvent to be used as long as it is an aprotic deuterated solvent. Examples thereof include deuterated dimethyl sulfoxide, deuterated dimethylformamide, deuterated dichloromethane, deuterated acetone, deuterated chloroform, deuterated acetonitrile, deuterated tetrahydrofuran, and deuterated benzene, and preferably, deuterated dimethyl sulfoxide, deuterated dimethylformamide, deuterated dichloromethane, deuterated acetone, deuterated chloroform, and deuterated acetonitrile. More preferably, deuterated dimethyl sulfoxide, deuterated dichloromethane, and deuterated chloroform, and still more preferably deuterated chloroform.

In the present invention, it is necessary to define a reference peak in a proton nuclear magnetic resonance spectroscopy (hereinafter may be abbreviated as a $^1$H-NMR method). Examples of the reference peak include a solvent peak contained in a deuterated solvent and a peak derived from tetramethylsilane or hexamethyldisiloxane spiked as a reference substance, and is preferably a peak derived from tetramethylsilane or hexamethyldisiloxane, and more preferably a peak derived from tetramethylsilane.

In the present invention, the pre-saturation method is applied to a PEG chain-derived proton peak in the $^1$H-NMR method. A chemical shift thereof varies depending on the deuterated solvent, and is 3.56 ppm, for example, when deuterated chloroform is used as the deuterated solvent.

In addition, in the pre-saturation method, the signal intensity of the maximum peak can be reduced by emitting radio waves having a specific frequency in advance, and the signal intensity of the maximum peak can be controlled based on the output of the radio waves. However, when the output of the radio waves is too large, the signal intensity of a peak around the maximum peak is small, and when it is too small, an S/N ratio of a target peak cannot be improved. Therefore, it is necessary to control the output of the radio waves as an attenuation amount using an attenuator of a nuclear magnetic resonance apparatus. The attenuation amount is preferably 40 dB to 90 dB, more preferably 50 dB to 80 dB, and still more preferably 60 dB to 70 dB.

In the present invention, an amount of the high molecular weight PEG-OH in the high molecular weight PEG derivative can be calculated based on an integral value of a peak (hereinafter may be abbreviated as a "target product-derived peak") derived from a methylene group next to an oxygen atom in a urethane bond of a compound after the high molecular weight PEG-OH is labeled by an isocyanate reagent as a labeling reagent (to be described later), using an integral value of a peak detected at a predetermined chemical shift as a reference (hereinafter may be abbreviated as a "quantitation reference peak").

Further, in quantitating the amount of the high molecular weight PEG-OH, it is necessary to set a quantitation reference peak. This quantitation reference peak may be detected within a range where the influence of the pre-saturation method is small and at a chemical shift that does not overlap a chemical shift of the target product-derived peak, and is preferably detected at a frequency that is 0.5 ppm or more away, and more preferably 0.9 ppm or more away from a chemical shift value of the proton derived from the PEG chain. As preferred aspects of the quantitation reference peak, for example, an integral value of a peak derived from tetramethylsilane as a reference peak, or an integral value of a peak derived from a high molecular weight PEG derivative may be used as the quantitation reference peak, and a quantitation reference substance such as triphenylmethane may be spiked, and an integral value of a peak derived from the quantitation reference substance may be used as the quantitation reference peak. Preferably, it is a peak derived from a high molecular weight PEG derivative or a peak derived from a quantitation reference substance.

In the $^1$H-NMR method, it is known that peaks coupled with $^{13}$C, which has a low natural abundance, are detected as satellite signals on both sides of a main signal. For example, 1.1% of $^1$H bonded to adjacent carbon atoms is split due to spin coupling with $^{13}$C contained in 1.1%, satellite signals with a height of 0.55% are detected on both sides of the main signal, and an integral value of a target product peak is smaller, which influences the quantitating property. In quantitation using the $^1$H-NMR method, in order to eliminate the influence of the satellite signals on the quantitating property, an inverse gated decoupling method that does not cause signal splitting due to coupling with $^{13}$C is used.

The process of quantitating the unreacted high molecular weight PEG-OH using a $^1$H-NMR method is performed during a reaction process including a multi-stage reaction by one-pot synthesis or during a purification process, and preferably during a reaction process.

It is preferable that a lower limit value of quantitating the unreacted high molecular weight PEG-OH using a $^1$H-NMR method is as small as possible, and according to the present invention, as will be described later, it is possible to quantitate up to 0.2 wt%.

In a preferred embodiment, the high molecular weight PEG-OH is represented by the following formula (1).

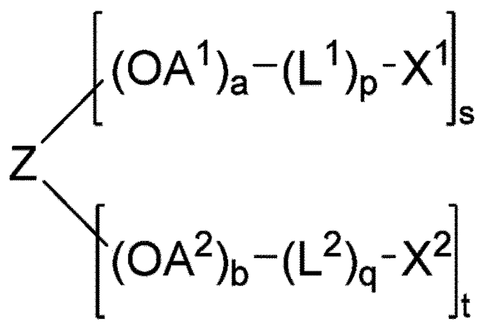

• • • (1)

Hereinafter, groups in the formula (1) will be described in detail.

In the formula (1), $OA^1$ and $OA^2$ are a divalent oxyethylene group represented by the following formula (4), * represents a bonding position with Z, ** represents a bonding position with $L^1$ or $L^2$, and n in the formula (4) is the number of moles of the oxyethylene group added and is a or b to be described later.

$$* -\!\left(OCH_2CH_2\right)_n\!- ** \quad (4)$$

a and b are each independently 0 to 2,500, and a+b is 200 or more. a and b each preferably 0 to 1,100. In addition, a+b is 200 or more, preferably 200 to 3,500, and more preferably 200 to 2,500.

Note that, the "high molecular weight" of the "high molecular weight PEG-OH" and the "high molecular weight PEG derivative" means that the total number of moles of the oxyethylene group added constituting each polyoxyethylene moiety is 200 or more. That is, the molecular weight of the "high molecular weight PEG-OH" and the "high molecular weight PEG derivative" in the present invention is a number average molecular weight determined by size exclusion chromatography, mass spectrometry, or the like, and is preferably 8,800 or more and 220,000 or less.

$L^1$ and $L^2$ are each independently an alkylene group which may have a bond selected from an ester bond, a urethane bond, an amide bond, a urea bond, an ether bond, and a thioether bond in an alkylene chain or at an end thereof, and the alkylene groups may be same as or different from each other in one molecule. $L^1$ and $L^2$ are each preferably an alkylene group which may have a bond selected from an ester bond, an amide bond, an ether bond, a thioether bond, a urethane bond, and a urea bond in the alkylene chain or at the end thereof, and more preferably an alkylene group which

may have a bond selected from an ester bond, an amide bond, an ether bond, and a urethane bond in the alkylene chain or at the end thereof. A particularly preferred form is one or more divalent spacers selected from the group consisting of formulas (z1), (z2), (z3), (z4), (z5), (z6), (z7), (z8), (z9), and (z10) shown in the following group (I). Preferably, 2 or more and 5 or less divalent spacers selected from the group consisting of formulas (z1), (z2), (z3), (z4), (z5), (z6), (z7), (z8), (z9), and (z10) shown in the following group (I) may be combined.

Group (I)

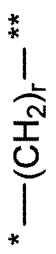
(z1)

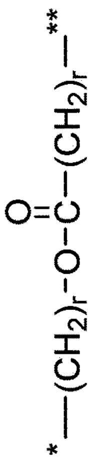
(z2)

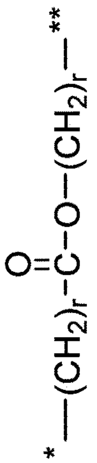
(z3)

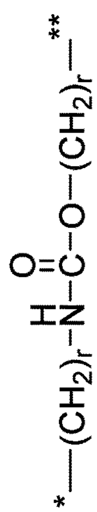
(z4)

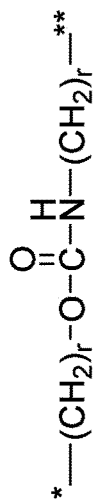
(z5)

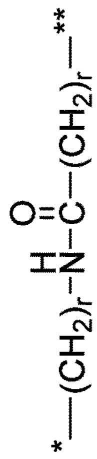
(z6)

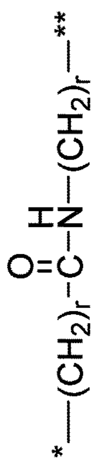
(z7)

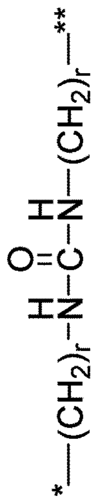
(z8)

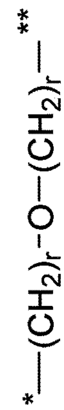
(z9)

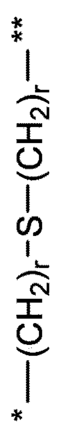
(z10)

In the formulas (z1), (z2), (z3), (z4), (z5), (z6), (z7), (z8), (z9), and (z10) shown in the group (I), "*" represents a bonding position with $OA^1$ or $OA^2$, and "**" represents a bonding position with $X^1$ or $X^2$.

In the formula (z1), r represents an integer of 1 to 10, preferably an integer of 1 to 6, and more preferably an integer of 1 to 5.

In the formula (z2) to the formula (z10), r's each independently represent an integer of 0 to 10, preferably an integer of 0 to 6, and more preferably an integer of 0 to 5. In addition, in the formula (z2) to the formula (z10), r's may be same as or different from each other.

In the formula (1), p and q respectively represent a repeating unit of $L^1$ and $L^2$ respectively bonded to $X^1$ or $X^2$, and are each independently 0 or 1, a single bond is obtained in the case where p and q are 0, and when $X^1$ and $X^2$ are hydroxy groups, p and q are preferably 0.

s and t are each independently 0 to 8, and $2 \leq s+t \leq 8$.

$X^1$ is a hydroxy group, an alkoxy group, an azide group, an oxycarbonyl group, an oxycarbonyloxy group, an oxycarbamoyl group, a cyano group, a silyl group, an acyloxy group, a sulfonyl group, or an imido group, and when t is 0, $X^1$ is a hydroxy group.

$X^2$ is a hydroxy group.

The hydroxy group in the definition of $X^1$ and $X^2$ in the formula (1) is a monovalent functional group represented by (-OH).

The alkoxy group in the definition of $X^1$ in the formula (1) is a monovalent functional group represented by ($-OR^1$). $R^1$ is an optionally substituted hydrocarbon group, and is preferably an alkyl group such as a methyl group, an ethyl group, a propyl group, an isopropyl group, a benzyl group, a trityl group, or an allyl group.

The number of carbon atoms in $R^1$ is preferably 1 to 30, and more preferably 1 to 20.

The azide group in the definition of $X^1$ in the formula (1) is a monovalent functional group represented by ($-N_3$).

The oxycarbonyl group in the definition of $X^1$ in the formula (1) is a monovalent functional group represented by ($-COOR^2$), and $R^2$ is an optionally substituted hydrocarbon group or a group represented by the following formulas (r1) to (r3). Examples of the optionally substituted hydrocarbon group include a linear or branched hydrocarbon group having 1 to 6 carbon atoms, a pentafluorophenyl group, and a p-nitriphenyl group, and $R^2$ is preferably an alkyl group such as a methyl group, an ethyl group, a propyl group, a butyl group, an isopropyl group, an isobutyl group, or a tert-butyl group, a benzyl group, a pentafluorophenyl group, a p-nitriphenyl group, or the formula (r1).

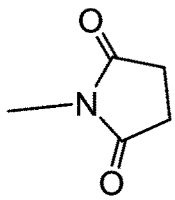
(r1)

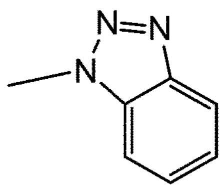
(r2)

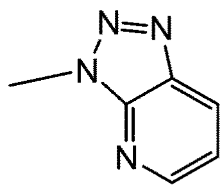
(r3)

The oxycarbonyloxy group in the definition of $X^1$ in the formula (1) is a monovalent functional group represented by ($-OCOOR^3$), and $R^3$ is a hydrocarbon group or a group represented by the following formulas (r1) and (r4). The number of carbon atoms in $R^3$ is preferably 1 to 10, and more preferably 1 to 6. $R^3$ is preferably an alkyl group such as a methyl group, an ethyl group, or a propyl group, or a group represented by the formula (r1) or the formula (r4), more preferably a group represented by the formula (r1) or the formula (r4), and still more preferably the formula (r1).

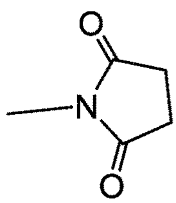
(r1)

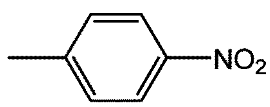
(r4)

The oxycarbamoyl group in the definition of $X^1$ in the formula (1) is a monovalent functional group represented by

(-NHCOOR$^4$), and $R^4$ is an optionally substituted hydrocarbon group. The number of carbon atoms in $R^4$ is preferably 1 to 20, and more preferably 1 to 14. $R^4$ is preferably an alkyl group such as a methyl group, an ethyl group, a propyl group, a butyl group, an isopropyl group, an isobutyl group, and a tert-butyl group, a benzyl group, an allyl group, a 2,2,2-trichloroethyl group, a 2-(trimethylsilyl)ethyl group, or a 9-fluorenylmethyl group, and more preferably a methyl group, a tert-butyl group, a benzyl group, an allyl group, a 2,2,2-trichloroethyl group, a 2-(trimethylsilyl)ethyl group, or a 9-fluorenylmethyl group.

The cyano group in the definition of $X^1$ in the formula (1) is a monovalent functional group represented by (-CN).

The silyl group in the definition of $X^1$ in the formula (1) is a monovalent functional group represented by (-Si($R^5R^6R^7$)). $R^5$ to $R^7$ are hydrocarbon groups and may be same as or different from each other, and the number of carbon atoms in $R^5$ to $R^7$ is preferably 1 to 10, and more preferably 1 to 7. Examples thereof include an alkyl group such as a methyl group, an ethyl group, a propyl group, a butyl group, a dodecyl group, an octyl group, an isopropyl group, and a tert-butyl group, a phenyl group, or a benzyl group, and preferred aspects of the silyl group are groups represented by the following formulas (r5) to (r9).

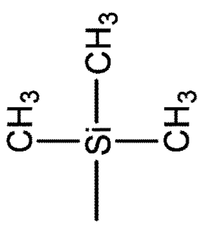

(r5)

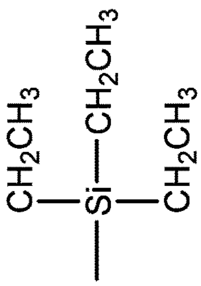

(r6)

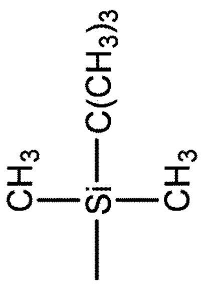

(r7)

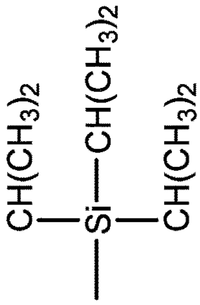

(r8)

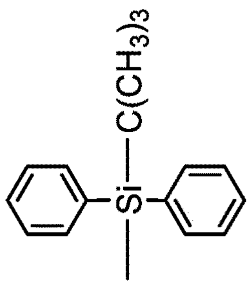

(r9)

The acyloxy group in the definition of $X^1$ in the formula (1) is a monovalent functional group represented by ($-OCOR^8$), and $R^8$ is an optionally substituted hydrocarbon group. The number of carbon atoms in $R^8$ is preferably 1 to 10, and more preferably 1 to 6. Preferred is an alkyl group such as a methyl group, an ethyl group, a propyl group, a butyl group, an isopropyl group, an isobutyl group, and a tert-butyl group, a phenyl group, a trifluoromethyl group, or a trichloromethyl group.

The sulfonyl group in the definition of $X^1$ in the formula (1) is a monovalent functional group represented by ($-S(=O)_2R^9$), and $R^9$ is a methyl group, a vinyl group, a trifluoromethyl group, a phenyl group, a p-methylphenyl group, an o-nitrophenyl group, a p-nitrophenyl group, a 2,4,6-trimethylphenyl group, a 2,4,6-triisopropylphenyl group, a pentafluorophenyl group, or a chloromethyl group, preferably a methyl group, a vinyl group, a trifluoromethyl group, or a p-methylphenyl group, and more preferably a methyl group or a vinyl group.

The imido group in the definition of $X^1$ in the formula (1) is a group represented by the following formulas (r10),

(r11), and (r12), and preferably the formula (r10).

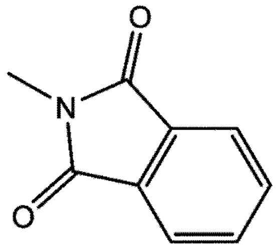

(r10)

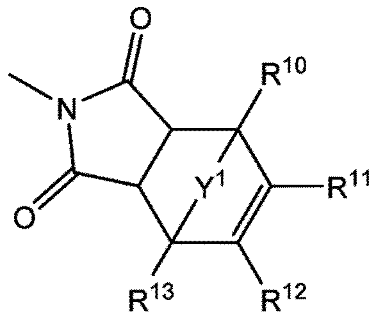

(r11)

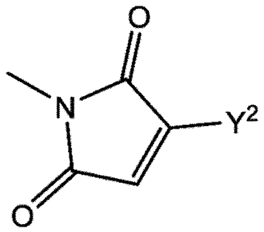

(r12)

In the formula (r11), $R^{10}$, $R^{11}$, $R^{12}$, and $R^{13}$ are each independently a hydrogen atom or a hydrocarbon group having 1 to 5 carbon atoms. It is preferable that $R^{10}$, $R^{11}$, $R^{12}$, and $R^{13}$ are hydrogen atoms, $R^{11}$, $R^{12}$, and $R^{13}$ are hydrogen atoms and $R^{10}$ is a methyl group, $R^{10}$, $R^{11}$, and $R^{12}$ are hydrogen atoms and $R^{13}$ is a methyl group, or $R^{11}$ and $R^{12}$ are hydrogen atoms and $R^{10}$ and $R^{13}$ are methyl groups.

$Y^1$ in the formula (r11) is an ether group, a methylene group, or a dimethylvinylidene group, and among these, an ether group (that is, an oxygen atom) is preferred.

$Y^2$ in the formula (r12) is a hydrogen atom or a hydrocarbon group having 1 to 5 carbon atoms, and preferably a hydrogen atom or a hydrocarbon group having 1 to 5 carbon atoms. Examples of the hydrocarbon group having 1 to 5 carbon atoms include a methyl group, an ethyl group, a propyl group, an isopropyl group, a butyl group, or a tert-butyl group. A hydrogen atom, a methyl group, or an ethyl group is preferred, and a hydrogen atom is more preferred.

The compound having 2 to 8 hydroxy groups and 2 to 21 carbon atoms in the definition of Z in the formula (1) is written as $Z(OH)_{s+t}$. The residue Z is a residue obtained by removing all the (s+t) hydroxy groups from the compound $Z(OH)_{s+t}$. The residue Z is preferably a hydrocarbon group that may have a nitrogen atom and/or an oxygen atom, and more preferably a saturated hydrocarbon group that may have a nitrogen atom and/or an oxygen atom. The number of carbon atoms in the hydrocarbon group is preferably 2 to 18, and more preferably 2 to 16. Specifically, the following forms can be exemplified.

- ·A saturated hydrocarbon group consisting of carbon atoms and hydrogen atoms and having 2 to 21 carbon atoms.
- ·A saturated hydrocarbon group consisting of carbon atoms, hydrogen atoms, and oxygen atoms and having 2 to 21 carbon atoms. Two saturated hydrocarbon groups are ether-bonded via respective oxygen atoms.
- ·A saturated hydrocarbon group consisting of carbon atoms, hydrogen atoms, and nitrogen atoms and having 2 to 21 carbon atoms. Three saturated hydrocarbon groups are N-C-bonded to each other via respective nitrogen atoms.
- ·A saturated hydrocarbon group consisting of carbon atoms, hydrogen atoms, oxygen atoms, and nitrogen atoms and having 2 to 21 carbon atoms. Two saturated hydrocarbon groups are ether-bonded to each other via respective oxygen atoms, and three saturated hydrocarbon groups are N-C-bonded to each other via respective nitrogen atoms.

In a preferred embodiment, the residue Z includes, for example, residues represented by formulas (z11) to (z20) described in a group (II).

Group (II)

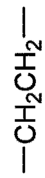
(z11)

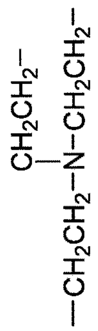
(z12)

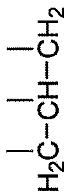
(z13)

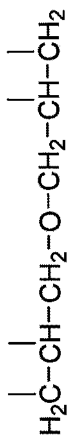
(z14)

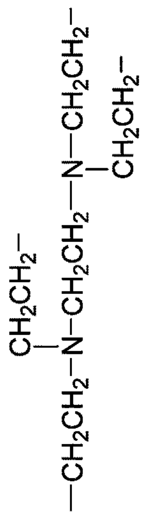
(z15)

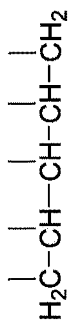
(z16)

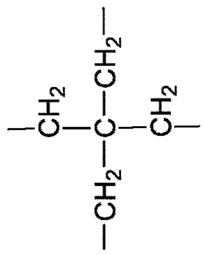
(z17)

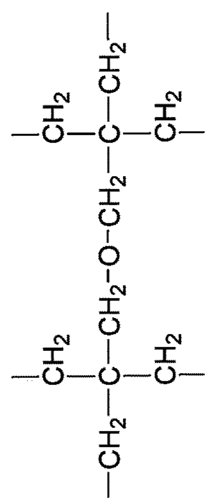
(z18)

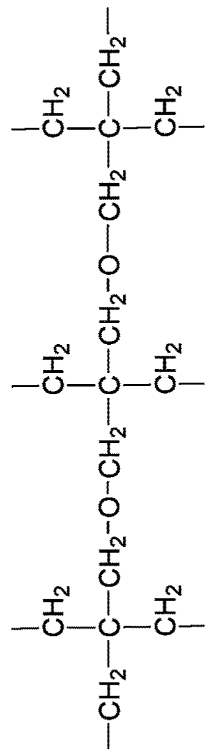
(z19)

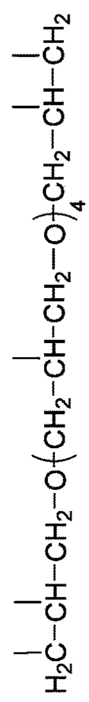
(z20)

In the present invention, a preferred aspect is the formula (z11), the formula (z13), the formula (z16), the formula (z17), or the formula (z20), and a more preferred aspect is the formula (z11), the formula (z13), or the formula (z17).

In the following formula (4), which is one of the preferred aspects of the high molecular weight PEG-OH represented by the formula (1), Z in the formula (1) is the formula (z11).

$$X^2—(L^2)_q\left(CH_2CH_2O\right)_b CH_2CH_2\left(OCH_2CH_2\right)_a(L^1)_p—X^1 \quad \cdots (4)$$

(In the formula (4), a, b, $L^1$, $L^2$, p, q, s, t, $X^1$, and $X^2$ have the same meanings as above.)

In the following formula (5), which is one of the preferred aspects of the high molecular weight PEG-OH represented by the formula (1), Z in the formula (1) is the formula (z13).

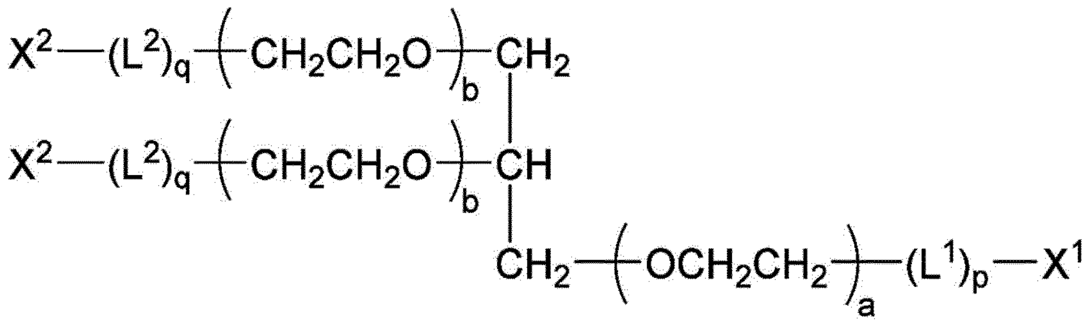

・・・ (5)

(In the formula (5), a, b, $L^1$, $L^2$, p, q, s, t, $X^1$, and $X^2$ have the same meanings as above.)

In the following formula (6), which is one of the preferred aspects of the high molecular weight PEG-OH represented by the formula (1), Z in the formula (1) is the formula (z16).

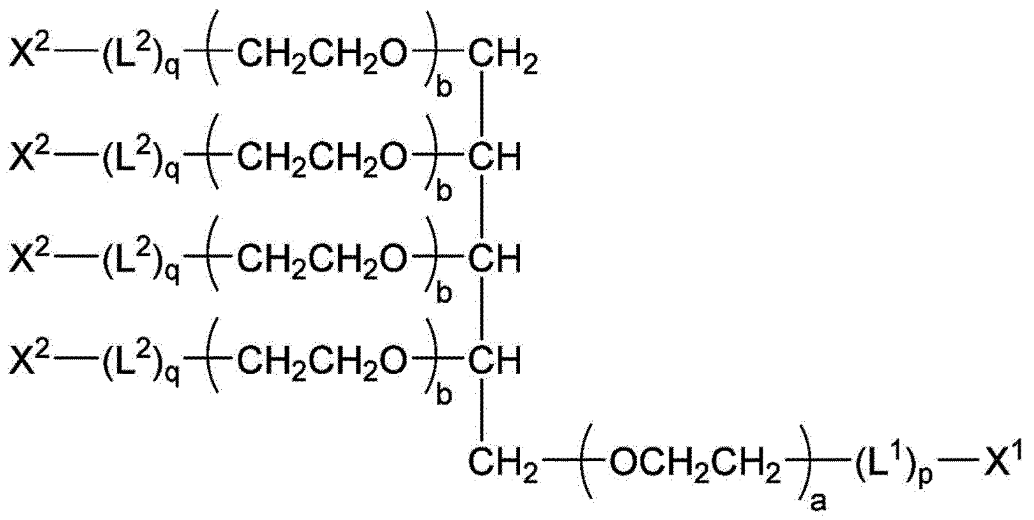

・・・ (6)

(In the formula (6), a, b, $L^1$, $L^2$, p, q, s, t, $X^1$, and $X^2$ have the same meanings as above.)

In the following formula (7), which is one of the preferred aspects of the high molecular weight PEG-OH represented by the formula (1), Z in the formula (1) is the formula (z17).

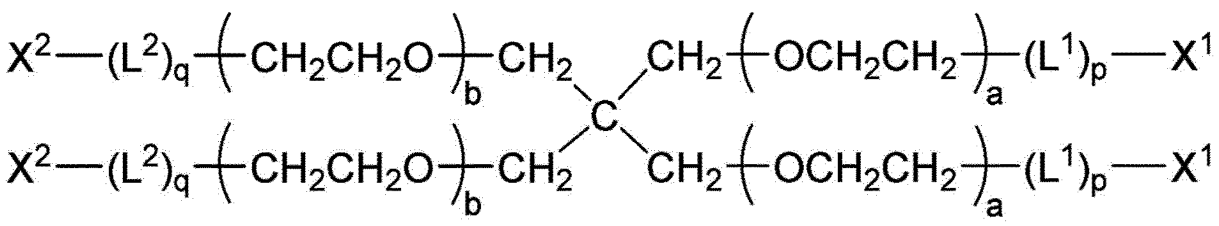

・・・ (7)

(In the formula (7), a, b, $L^1$, $L^2$, p, q, s, t, $X^1$, and $X^2$ have the same meanings as above.)

In the following formula (8), which is one of the preferred aspects of the high molecular weight PEG-OH represented by the formula (1), Z in the formula (1) is the formula (z20).

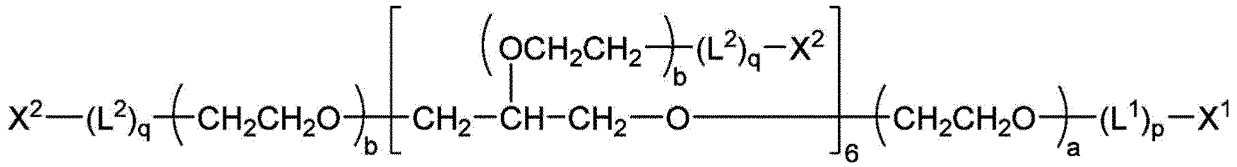

• • • (8)

(In the formula (8), a, b, $L^1$, $L^2$, p, q, s, t, $X^1$, and $X^2$ have the same meanings as above.)

The high molecular weight polyoxyethylene derivative after derivatization according to the present invention is represented by the following formula (2).

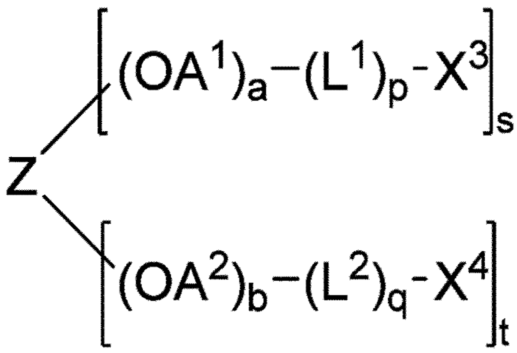

• • • $(2)_b$

(In the formula (2),

- $OA^1$ and $OA^2$ are an oxyethylene group,
- a and b are each independently 0 to 2,500, and a+b is 200 or more,
- $L^1$ and $L^2$ are each independently an alkylene group which may have a bond selected from an ester bond, a urethane bond, an amide bond, a urea bond, an ether bond, and a thioether bond in an alkylene chain or at an end thereof, and the alkylene groups may be same as or different from each other in one molecule,
- p and q are each independently 0 or 1,
- s and t are each independently 0 to 8, and $2 \leq s+t \leq 8$,
- $X^3$ and $X^4$ are each independently an alkoxy group, an azide group, an oxycarbonyl group, an oxycarbonyloxy group, an oxycarbamoyl group, a cyano group, a silyl group, an acyloxy group, a sulfonyl group, or an imido group, and
- Z is a residue obtained by removing all hydroxy groups from a compound having 2 to 8 hydroxy groups and 2 to 21 carbon atoms.)

The explanations (specifically a, b, $L^1$, $L^2$, p, q, s, t, and Z) in the high molecular weight polyoxyethylene derivative according to the present invention represented by formula (2) are as described above, and $X^3$ and $X^4$ have the same meaning as $X^1$ in the high molecular weight polyoxyethylene compound having a hydroxy group according to the present invention represented by the formula (1).

The labeling reagent used in the present invention is represented by the following formula (3).

$$R\text{-}N{=}C{=}O \qquad (3)$$

R in the formula (3) is an organic group having an electron-withdrawing group, and the electricity-withdrawing group is a substituent that tends to attract electrons from the bonded atom side compared to a hydrogen atom, and examples thereof include organic groups represented by formulas (r13) to (r49) described in a group (III).

Group (III)

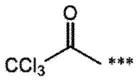 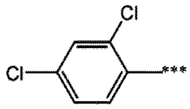 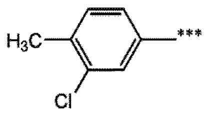 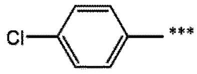 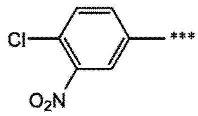

(r13) (r14) (r15) (r16) (r17)

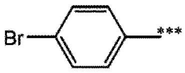 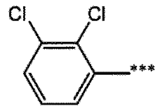 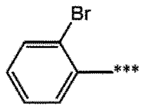 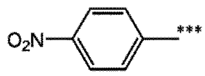 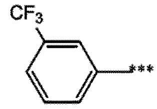

(r18) (r19) (r20) (r21) (r22)

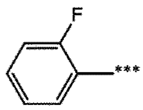 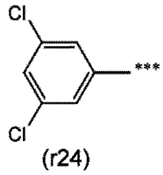 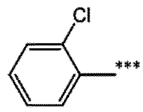 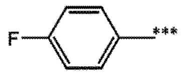 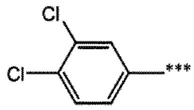

(r23) (r24) (r25) (r26) (r27)

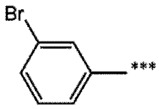 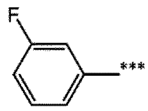 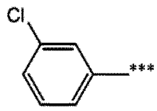 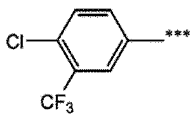 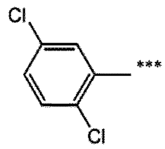

(r28) (r29) (r30) (r31) (r32)

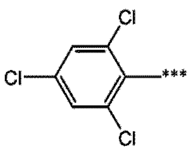 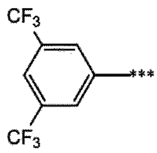 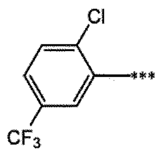 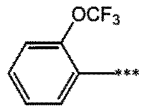 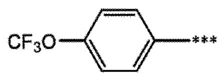

(r33) (r34) (r35) (r36) (r37)

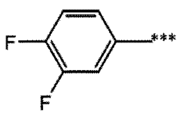 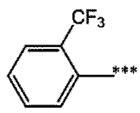 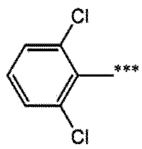 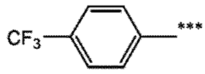 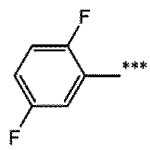

(r38) (r39) (r40) (r41) (r42)

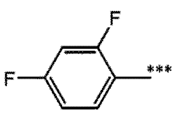 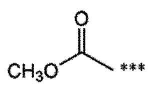 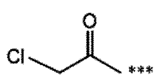 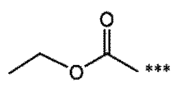

(r43) (r44) (r45) (r46)

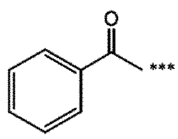 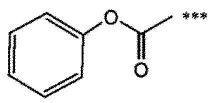 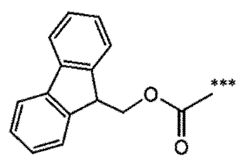

(r47) (r48) (r49)

A particularly preferred aspect is the formula (r13), (r14), (r17), (r19), (r24), (r27), (r31), (r33), (r34), (r35), (r38), (r40), (r42), (r43), (r44), (r45), (r46), (r47), (r48), or (r49), a more preferred form is the formula (r13), (r23), (r44), (r45), (r46), (r47), (r48), or (r49), and a still more preferred form is the formula (r13). In addition, "***" represents a bonding position of -(N=C=O) with a nitrogen atom.

In the present invention, there is no particular restriction on the amount of the labeling reagent represented by the formula (3) used, as long as it is used in excess such that the unreacted high molecular weight polyoxyethylene compound having a hydroxy group can be sufficiently labeled. It is preferably used in an amount of 1 to 100 equivalents, more preferably 10 to 100 equivalents, and still more preferably 30 to 100 equivalents, with respect to the high molecular weight polyoxyethylene compound contained in the deuterated solvent.

In the present invention, the labeling reagent for analysis use for a high molecular weight polyoxyethylene compound is represented by the formula (3), and the explanation of the formula (3) is as described above. The labeling reagent for analysis use is not limited to $^1$H-NMR analysis, but may be used for other analyses such as high performance liquid chromatography analysis.

## EXAMPLES

The present invention will be described in more detail with reference to Examples. The accuracy of quantitating the amount of the high molecular weight PEG-OH contained in a high molecular weight PEG derivative is shown, and note that the present invention is not limited to the following Examples.

$^1$H-NMR was obtained from a nuclear magnetic resonance apparatus (JNM-ECZ400 or JNM-ECA600) manufactured by JEOL Ltd. A tube having a diameter of 5 mm was used for the measurement, and $CDCl_3$ containing tetramethylsilane (TMS) was used as an internal standard substance for a deuterated solvent.

[Example 1: Evaluation on quantitating property of PEG-OH contained in PEG carboxylic acid]

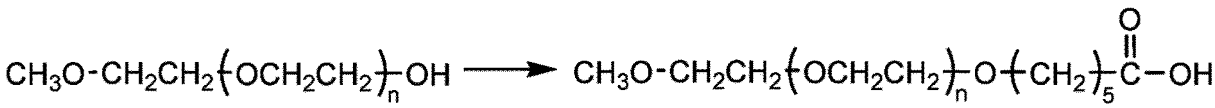

PEG-OH　　　　PEG-O-$(CH_2)_5$-COOH

n = 455

・・・(10)

In an etherification reaction of obtaining PEG-O-$(CH_2)_5$-COOH (molecular weight: 20,000) from PEG-OH (molecular weight: 20,000), as represented by the formula (10), the quantitating property of the unreacted PEG-OH (molecular weight: 20,000) was checked by a spike and recovery test in the following manner.

That is, into a screw tube into which 100 mg of "SUNBRIGHT ME-200HC" (number average molecular weight: 20,185) manufactured by NOF Corporation having the same structure as the PEG-O-$(CH_2)_5$-COOH in the formula (10) was charged, "MEH-20T" (number average molecular weight: 19,689) manufactured by NOF Corporation having the same structure as the PEG-OH in the formula (10) was spiked at 0.1 wt% to 1.0 wt% with respect to "SUNBRIGHT ME-200HC" manufactured by NOF Corporation, to obtain each sample in Experiment 1 to Experiment 4. To each sample, 80 $\mu$L of triphenylmethane (10 $\mu$g/$\mu$L) dissolved in deuterated chloroform and 620 $\mu$L of deuterated chloroform were added, followed by dissolution. Thereafter, 20 $\mu$L of trichloroacetyl isocyanate (TCI product) was added to each sample, followed by mixing by inversion. After the mixing by inversion, each sample was measured using a nuclear magnetic resonance apparatus by applying a pre-saturation method to a PEG chain-derived proton peak (3.56 ppm) and using inverse gated decoupling under the following conditions.

Reference peak: TMS
Quantitation reference peak: triphenylmethane ($(C_6H_5)_3$-CH, 5.55 ppm)
Target product peak: -$(OCH_2CH_2)_n$-$OCH_2CH_2$-OCONH-$COCCl_3$, 4.42 ppm
Pulse sequence: single_pulse_irrdec
Attenuator: 60 dB
Measurement temperature: 25°C

Number of times for integration: 1024

When the integral value of the quantitation reference peak was set to 0.6548, a spike and recovery rate of each sample was calculated according to the following equation.

$$\text{Spike and recovery rate (\%)} = (\text{integral value of target product peak}/2) \times 100$$

An allowable range of the spike and recovery rate was set as ±30%, and a range in which the spike and recovery was possible was checked.

[Table 1]

| | Experiment 1 | Experiment 2 | Experiment 3 | Experiment 4 |
|---|---|---|---|---|
| Spiked amount (wt%) | 0.1 | 0.2 | 0.4 | 1.0 |
| Spike and recovery rate (%) | -(*) | 67.5 | 121.3 | 93.5 |
| (*): not calculated due to no peak detected | | | | |

As listed in Table 1, it is found that the PEG-OH contained in the PEG-O-$(CH_2)_5$-COOH in the formula (10) can be spiked and recovered in a range of at least 0.4 wt% or more, that is, it can be quantitated down to 0.4 wt%, with respect to the PEG-O-$(CH_2)_5$-COOH.

[Example 2: Evaluation on quantitating property of $(PEG)_2$-OH contained in $(PEG)_2$-phthalimide]

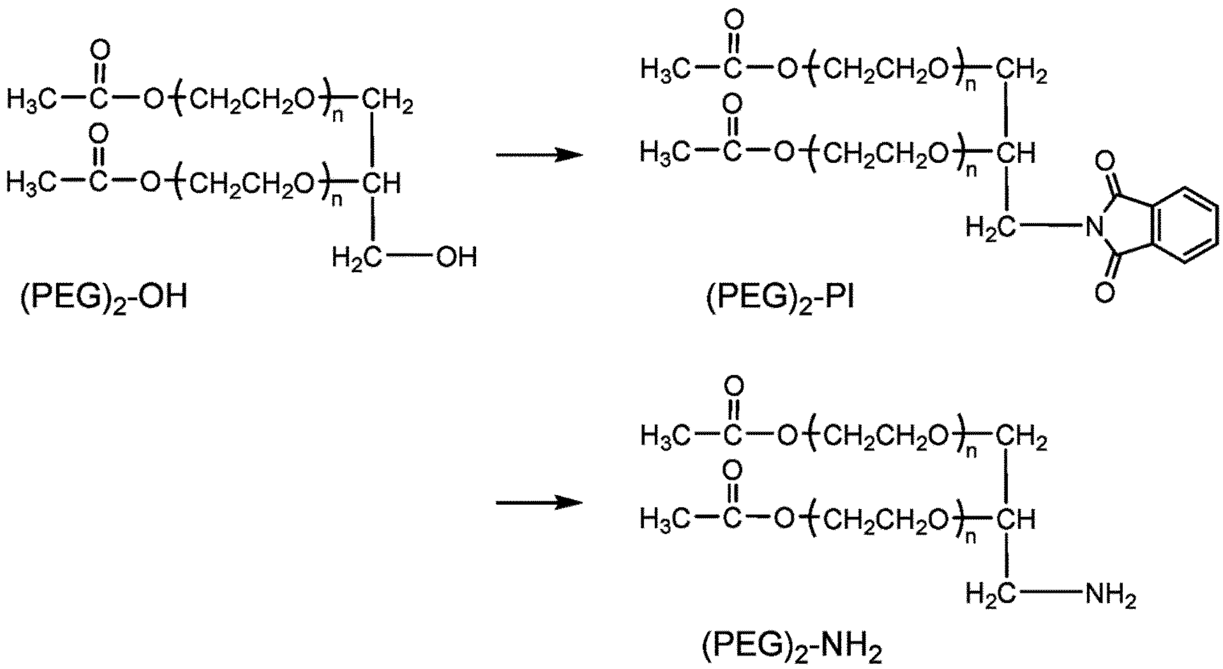

$(PEG)_2$-OH

$(PEG)_2$-PI

$(PEG)_2$-$NH_2$

n = 114

・・・(11)

During one-pot synthesis as a two-stage reaction of obtaining $(PEG)_2$-$NH_2$ (molecular weight: 10,000) from $(PEG)_2$-OH (molecular weight: 10,000), as represented by the formula (11), in the first stage of phthalimidation reaction of obtaining $(PEG)_2$-PI from the $(PEG)_2$-OH, the quantitating property of the unreacted $(PEG)_2$-OH (molecular weight: 10,000) was checked by a spike and recovery test in the following manner.

Into a screw tube into which 100 mg of "SUNBRIGHT 2AC-GL2-100EI" (number average molecular weight: 10,082) manufactured by NOF Corporation having the same structure as the $(PEG)_2$-PI in the formula (11) was charged, "SUNBRIGHT 2AC-GL2-100HO" (number average molecular weight: 9,975) manufactured by NOF Corporation having the same structure as the $(PEG)_2$-OH in the formula (11) was spiked at 0.25 wt% to 0.50 wt% with respect to "SUNBRIGHT 2AC-GL2-100EI", to obtain each sample in Experiment 5 and Experiment 6. To each sample, 80 μL of triphenylmethane (10 μg/μL) dissolved in deuterated chloroform and 620 μL of deuterated chloroform were added, followed by dissolution. Thereafter, 20 μL of trichloroacetyl isocyanate (TCI product) was added to each sample, followed by mixing by inversion. After the mixing by inversion, each sample was measured using a nuclear magnetic resonance apparatus by applying a pre-saturation method to a PEG chain-derived proton peak (3.56 ppm) and using inverse gated decoupling under the following conditions.

Reference peak: TMS
Quantitation reference peak: triphenylmethane ($(C_6H_5)_3$-$\underline{CH}$, 5.55 ppm)
Target product peak: -CH((-$OCH_2CH_2)_n$-$OCOCH_3$)-$\underline{CH_2}$-OCONH-$COCCl_3$, 4.34 ppm
Pulse sequence: single_pulse_irrdec
Attenuator: 50 dB
Measurement temperature: 25°C
Number of times for integration: 256

When the integral value of the quantitation reference peak was set to 0.3274, a spike and recovery rate of each sample was calculated according to the following equation.

$$\text{Spike and recovery rate (\%)} = (\text{integral value of target product peak}/1) \times 100$$

An allowable range of the spike and recovery rate was set as ±30%, and a range in which the spike and recovery was possible was checked.

[Table 2]

| | Experiment 5 | Experiment 6 |
|---|---|---|
| Spiked amount (wt%) | 0.25 | 0.50 |
| Spike and recovery rate (%) | 100 | 97.0 |

As listed in Table 2, it is found that the $(PEG)_2$-OH contained in the $(PEG)_2$-PI can be spiked and recovered in a range of 0.25 wt% or more, that is, it can be quantitated down to 0.25 wt%, with respect to the $(PEG)_2$-PI.

[Example 3: Evaluation on quantitating property of PEG-OH contained in PEG-O-$CH_2$-$C_6H_5$]

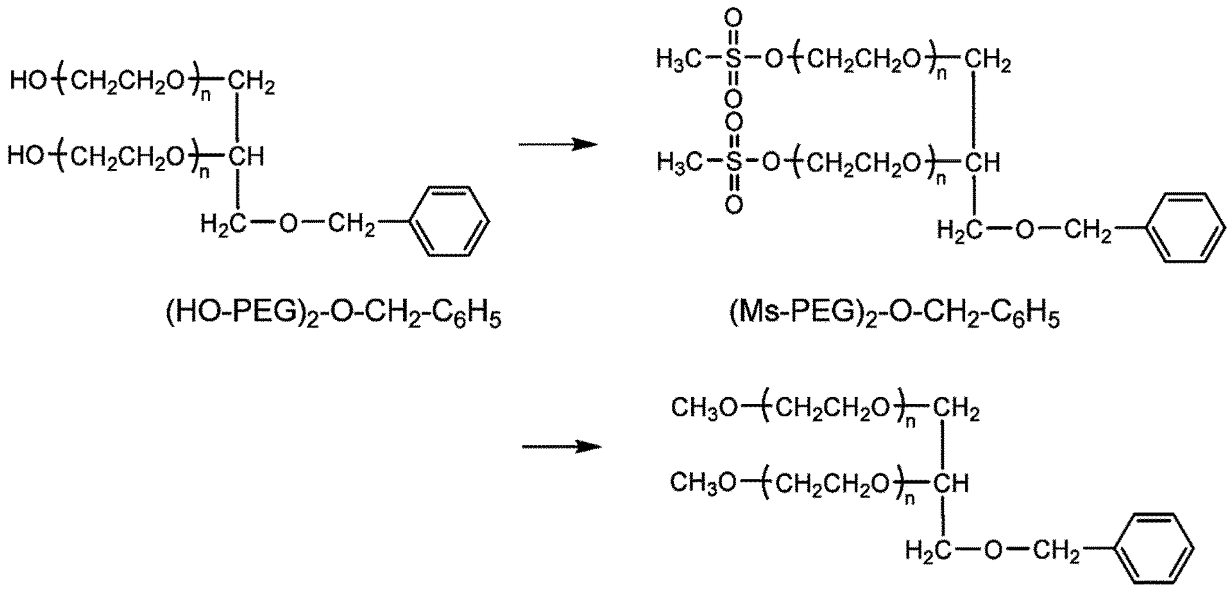

$(HO\text{-}PEG)_2\text{-}O\text{-}CH_2\text{-}C_6H_5$ $(Ms\text{-}PEG)_2\text{-}O\text{-}CH_2\text{-}C_6H_5$

$(PEG)_2\text{-}O\text{-}CH_2\text{-}C_6H_5$

n = 227

・・・(12)

During one-pot synthesis as a two-stage reaction of obtaining $(PEG)_2$-O-$CH_2$-$C_6H_5$ from (HO-$PEG)_2$-O-$CH_2$-$C_6H_5$, as represented by the formula (12), in the second stage of methoxylation reaction of obtaining the $(PEG)_2$-O-$CH_2$-$C_6H_5$ from (Ms-$PEG)_2$-O-$CH_2$-$C_6H_5$, the quantitating property of the unreacted (HO-$PEG)_2$-O-$CH_2$-$C_6H_5$ was checked by a spike and recovery test in the following manner.

Into a screw tube into which 100 mg of "SUNBRIGHT GL2-200BZ" (number average molecular weight: 19,451) manufactured by NOF Corporation having the same structure as the $(PEG)_2$-O-$CH_2$-$C_6H_5$ in the formula (12) was charged, "SUNBRIGHT GL2-200BH" (number average molecular weight: 19,859) manufactured by NOF Corporation having the same structure as the (HO-$PEG)_2$-O-$CH_2$-$C_6H_5$ in the formula (12) was spiked at 0.1 wt% to 1.0 wt% with respect to "SUNBRIGHT GL2-200BZ", to obtain each sample in Experiment 7 to Experiment 10. To each sample, 700 μL of deuterated chloroform was added, followed by dissolution. Thereafter, 20 μL of trichloroacetyl isocyanate (TCI product) was added to each sample, followed by mixing by inversion. After the mixing by inversion, each sample was measured using a nuclear magnetic resonance apparatus by applying a pre-saturation method to a PEG chain-derived proton peak (3.56 ppm) and using inverse gated decoupling under the following conditions.

Reference peak: TMS
Quantitation reference peak: -$CH_2$-O-$CH_2$-$C_6H_5$, 4.54 ppm
Target product peak: -(($OCH_2CH_2)_n$-$OCH_2CH_2$-OCONH-$COCCl_3)_2$, 4.42 ppm
Pulse sequence: single_pulse_irrdec
Attenuator: 60 dB
Measurement temperature: 25°C
Number of times for integration: 1024

When the integral value of the quantitation reference peak was set to 2.000, a spike and recovery rate of each sample was calculated according to the following equation.

$$\text{Spike and recovery rate (\%)} = (\text{integral value of target product peak}/4) \times 100$$

An allowable range of the spike and recovery rate was set as ±30%, and a range in which the spike and recovery was possible was checked.

[Table 3]

| | Experiment 7 | Experiment 8 | Experiment 9 | Experiment 10 |
|---|---|---|---|---|
| Spiked amount (wt%) | 0.1 | 0.2 | 0.4 | 1.0 |
| Spike and recovery rate (%) | -(*) | 112.5 | 118.8 | 95.0 |
| (*): not calculated due to no peak detected | | | | |

As listed in Table 3, it is found that the $(HO-PEG)_2-O-CH_2-C_6H_5$ contained in the $(PEG)_2-O-CH_2-C_6H_5$ in the formula (12) can be spiked and recovered in a range of 0.2 wt% or more, that is, it can be quantitated down to 0.2 wt%, with respect to the $(PEG)_2-O-CH_2-C_6H_5$.

[Example 4: Evaluation on quantitating property of 4arm PEG-OH contained in 4arm PEG-CN]

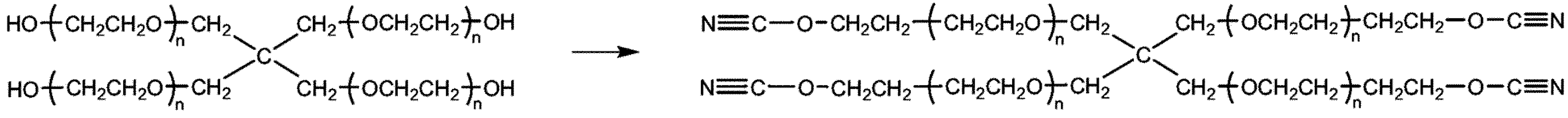

4arm PEG-OH

4arm PEG-CN

$n = 114$

・・・(13)

In a cyanoethylation reaction of obtaining 4arm PEG-CN from 4arm PEG-OH, as represented by the formula (13), the quantitating property of the unreacted 4arm PEG-OH was checked by a spike and recovery test in the following manner.

Into a screw tube into which 100 mg of "SUNBRIGHT PTE-200CN" (number average molecular weight: 20,086) manufactured by NOF Corporation having the same structure as the 4arm PEG-CN in the formula (13) was charged, "SUNBRIGHT PTE-20000" (number average molecular weight: 20,568) manufactured by NOF Corporation having the same structure as the "4arm PEG-OH" in the formula (13) was spiked at 0.1 wt% to 1.0 wt% with respect to "SUNBRIGHT PTE-200CN", to obtain each sample in Experiment 11 to Experiment 14. To each sample, 80 μL of triphenylmethane (10 μg/μL) dissolved in deuterated chloroform and 620 μL of deuterated chloroform were added, followed by dissolution. Thereafter, 20 μL of trichloroacetyl isocyanate (TCI product) was added to each sample, followed by mixing by inversion. After the mixing by inversion, each sample was measured using a nuclear magnetic resonance apparatus by applying a pre-saturation method to a PEG chain-derived proton peak (3.56 ppm) and using inverse gated decoupling under the following conditions.

Reference peak: TMS
Quantitation reference peak: triphenylmethane ($(C_6H_5)_3$-CH, 5.55 ppm)
Target product peak: $-[(OCH_2CH_2)_n-OCH_2\underline{CH_2}-OCONH-COCCl_3]_4$, 4.42 ppm
Pulse sequence: single_pulse_irrdec
Attenuator: 60 dB
Measurement temperature: 25°C
Number of times for integration: 1024

When the integral value of the quantitation reference peak was set to 0.6548, a spike and recovery rate of each sample was calculated according to the following equation.

$$\text{Spike and recovery rate (\%)} = (\text{integral value of target product peak}/8) \times 100$$

An allowable range of the spike and recovery rate was set as ±30%, and a range in which the spike and recovery was possible was checked.

[Table 4]

| | Experiment 11 | Experiment 12 | Experiment 13 | Experiment 14 |
|---|---|---|---|---|
| Spiked amount (wt%) | 0.1 | 0.2 | 0.4 | 1.0 |
| Spike and recovery rate (%) | -(*) | 46.3 | 75.6 | 106.3 |
| (*): not calculated due to no peak detected | | | | |

As listed in Table 4, it is found that the 4arm PEG-OH contained in the 4arm PEG-CN can be spiked and recovered in a range of 0.4 wt% or more, that is, it can be quantitated down to 0.4 wt%, with respect to the 4arm PEG-CN.

[Example 5: Evaluation on quantitating property of 8arm PEG-OH contained in 8arm PEG-VS]

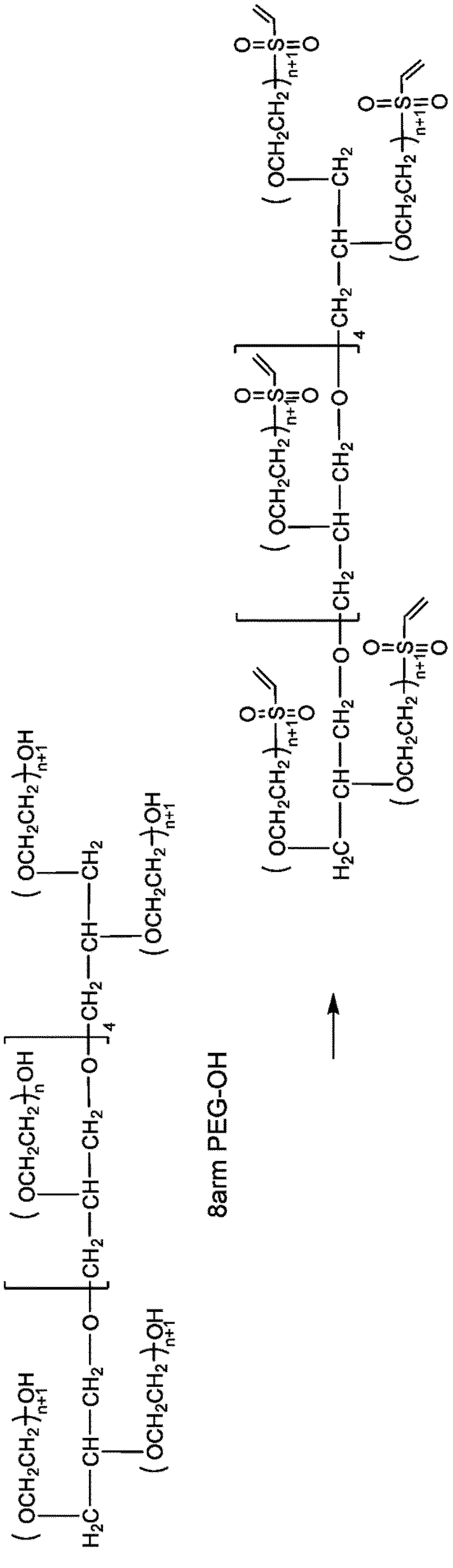

8arm PEG-OH

8arm PEG-VS

n = 1 1 4

・・・(1 4)

In a vinyl sulfonation reaction of obtaining 8arm PEG-VS from 8arm PEG-OH, as represented by the formula (14), the quantitating property of the unreacted 8arm PEG-OH was checked by a spike and recovery test in the following manner.

Into a screw tube into which 100 mg of "SUNBRIGHT HGEO-400VS" (number average molecular weight: 40,731) manufactured by NOF Corporation having the same structure as the 8arm PEG-VS in the formula (14) was charged, "SUNBRIGHT HGEO-40000" (number average molecular weight: 43,573) manufactured by NOF Corporation having the same structure as the 8arm PEG-OH in the formula (14) was spiked at 0.1 wt% to 1.0 wt% with respect to "SUNBRIGHT HGEO-400VS", to obtain each sample in Experiment 15 to Experiment 18. To each sample, 80 μL of triphenylmethane (10 μg/μL) dissolved in deuterated chloroform and 620 μL of deuterated chloroform were added, followed by dissolution. Thereafter, 20 μL of trichloroacetyl isocyanate (TCI product) was added to each sample, followed by mixing by inversion. After the mixing by inversion, each sample was measured using a nuclear magnetic resonance apparatus by applying a pre-saturation method to a PEG chain-derived proton peak (3.56 ppm) and using inverse gated decoupling under the following conditions.

Reference peak: TMS
Quantitation reference peak: triphenylmethane ($(C_6H_5)_3$-<u>CH</u>, ppm)
Target product peak: $-[(OCH_2CH_2)_n-OCH_2\underline{CH_2}-OCONH-COCCl_3]_8$, ppm
Pulse sequence: single_pulse_irrdec
Attenuator: 60 dB
Measurement temperature: 25°C
Number of times for integration: 1024

When the integral value of the quantitation reference peak was set to 1.3096, a spike and recovery rate of each sample was calculated according to the following equation.

$$\text{Spike and recovery rate (\%)} = (\text{integral value of target product peak}/16) \times 100$$

An allowable range of the spike and recovery rate was set as ±30%, and a range in which the spike and recovery was possible was checked.

[Table 5]

| | Experiment 15 | Experiment 16 | Experiment 17 | Experiment 18 |
|---|---|---|---|---|
| Spiked amount (wt%) | 0.1 | 0.2 | 0.4 | 1.0 |
| Spike and recovery rate (%) | -(*) | 111.5 | 95.8 | 110.3 |
| (*): not calculated due to no peak detected | | | | |

As listed in Table 5, it is found that the 8arm PEG-OH contained in the 8arm PEG-VS in the formula (14) can be spiked and recovered in a range of 0.2 wt% or more, that is, it can be quantitated down to 0.2 wt%, with respect to the 8arm PEG-VS.

[Comparative Example 1: Evaluation on quantitating property of $(HO-PEG)_2-O-CH_2-C_6H_5$ contained in $(PEG)_2-O-CH_2-C_6H_5$]

In the second stage of methoxylation process of obtaining the $(PEG)_2-O-CH_2-C_6H_5$ from the $(Ms-PEG)_2-O-CH_2-C_6H_5$ as shown in Example 3, the quantitating property of the unreacted $(HO-PEG)_2-O-CH_2-C_6H_5$ was checked by a spike and recovery test according to a method described in Patent Literature 1 in the following manner. The method described in Patent Literature 1 is a method using methanesulfonyl chloride as a labeling reagent.

Into a screw tube into which 100 mg of "SUNBRIGHT GL2-200BZ" (number average molecular weight: 19,451) manufactured by NOF Corporation as an equivalent product of the $(PEG)_2-O-CH_2-C_6H_5$ was charged, "SUNBRIGHT 2MS-GL2-200BZ" (number average molecular weight: 19,607) manufactured by NOF Corporation as an equivalent product of the $(Ms-PEG)_2-O-CH_2-C_6H_5$, obtained by labeling the $(HO-PEG)_2-O-CH_2-C_6H_5$ with methanesulfonyl chloride, was spiked at 0.1 wt% to 2.0 wt% with respect to "SUNBRIGHT GL2-200BZ", to obtain each sample in Experiment 19 to Experiment 22. To each sample, 700 μL of deuterated chloroform was added, followed by dissolution, and then each sample was measured using a nuclear magnetic resonance apparatus under the following conditions.

No pre-saturation method or inverse gated decoupling was applied.

Reference peak: TMS
Quantitation reference peak: $-CH_2-O-CH_2-C_6H_5$, 4.54 ppm
Target product peak: $-((OCH_2CH_2)_n-O-S(=O)_2-CH_3)_2$, 3.00 ppm
Pulse sequence: single_pulse
Measurement temperature: 25°C
Number of times for integration: 128

When the integral value of the quantitation reference peak was set to 2.000, a spike and recovery rate of each sample was calculated according to the following equation.

$$\text{Spike and recovery rate (\%)} = (\text{integral value of target product peak}/6) \times 100$$

An allowable range of the spike and recovery rate was set as ±30%, and a range in which the spike and recovery was possible was checked.

[Table 6]

| | Experiment 19 | Experiment 20 | Experiment 21 | Experiment 22 |
|---|---|---|---|---|
| Spiked amount (wt%) | 0.1 | 0.2 | 0.4 | 1.0 |
| Spike and recovery rate (%) | -(*) | 91.9 | 75.3 | 102.7 |
| (*): not calculated due to no peak detected | | | | |

As listed in Table 6, it is found that the $(HO-PEG)_2-O-CH_2-C_6H_5$ contained in the $(PEG)_2-O-CH_2-C_6H_5$ can be quantitated down to 0.2 wt% with respect to the $(PEG)_2-O-CH_2-C_6H_5$. That is, the unreacted $(HO-PEG)_2-O-CH_2-C_6H_5$ contained in the $(PEG)_2-O-CH_2-C_6H_5$ can be spiked and recovered in a range of 0.2 wt% or more, that is, it can be quantitated down to 0.2 wt%. This is equivalent to the quantitating property shown in Example 3, indicating that the analysis method according to the present invention has quantitative accuracy equivalent to that previously reported.

[Example 6: Evaluation on production time in present invention]

During one-pot synthesis as a two-stage reaction of obtaining $(PEG)_2-O-CH_2-C_6H_5$ from $(HO-PEG)_2-O-CH_2-C_6H_5$, as described Patent Literature 1, the production time required when the analysis method according to the present invention was used to check the completion of the reaction process was evaluated in the following manner.

That is, according to Example 16-4 in Patent Literature 1, the second alkyl etherification was carried out over 9 hours using $(HO-PEG)_2-O-CH_2-C_6H_5$ (200 g) as a raw material, and then the completion of the reaction process was checked using the analysis method according to the present invention, that is, in the following manner.

The reaction solution (5 mL) was sampled, and the precipitate was removed by suction filtration. To the obtained filtrate, 100 mL of ethyl acetate was added, and the mixture was stirred for 5 minutes under a nitrogen atmosphere. Thereafter, 100 mL of hexane was added, the mixture was stirred for 10 minutes to precipitate crystals, and then the crystals were collected by suction filtration.

The collected crystals were dried under a reduced pressure for 1 hour, and 100 mg of the dry solid was dissolved in 0.7 mL of deuterated chloroform. 20 μL of trichloroacetyl isocyanate was spiked thereto, followed by mixing by inversion. Thereafter, the amount of the unreacted $(HO-PEG)_2-O-CH_2-C_6H_5$ was checked by $^1H$-NMR analysis under the same measurement conditions as in Example 3, and it was found that the reaction was complete.

It was found by the analysis over 3 hours after sampling the reaction solution that the amount of the unreacted $(HO-PEG)_2-O-CH_2-C_6H_5$ was 0.2% or less. Then, according to Example 16-4 in Patent Literature 1, washing with water, dehydration, and crystallization were carried out for 6 hours, followed by drying under a reduced pressure for 8 hours, and the $(PEG)_2-O-CH_2-C_6H_5$ was obtained in a total production time of 26 hours.

[Comparative Example 2: Evaluation on production time in related-art method]

During one-pot synthesis as a two-stage reaction of obtaining the $(PEG)_2-O-CH_2-C_6H_5$ from the $(HO-PEG)_2-O-CH_2-C_6H_5$, as described Patent Literature 1, in order to check the completion of the reaction process, methanesulfonyl chloride was used as a labeling reagent, and in the case of no reaction, the production time to check the amount of the (HO-

$PEG)_2-O-CH_2-C_6H_5$ was evaluated in the following manner.

According to Example 16-4 in Patent Literature 1, the second alkyl etherification was carried out over 9 hours using $(HO-PEG)_2-O-CH_2-C_6H_5$ (200 g) as a raw material, and then the completion of the reaction process was checked using the method described in Example 27 in Patent Literature 1, that is, in the following manner.

The reaction solution (20 mL) was sampled, and the precipitated chloride was removed by suction filtration. To the obtained filtrate, 300 mL of ethyl acetate was added, and the mixture was stirred for 5 minutes under a nitrogen atmosphere. Thereafter, 300 mL of hexane was added, the mixture was stirred for 30 minutes to precipitate crystals, and then the crystals were collected by suction filtration.

The collected crystals were dried under a reduced pressure for 5 hours, 3.0 g of the obtained dry solid was charged into a round bottom flask, and 100 g of toluene was added thereto and heated under a reflux for 1 hour to azeotropically remove 50 g of toluene and water. After cooling to room temperature, 0.095 g of triethylamine was added, the mixture was heated to 40°C, 0.054 g of methanesulfonyl chloride was spiked, and the mixture was reacted at 40°C for 3 hours. After the reaction was completed, the precipitated chloride was removed by suction filtration. To the obtained filtrate, 100 mL of ethyl acetate was added, and the mixture was stirred for 5 minutes under a nitrogen atmosphere. Thereafter, 100 mL of hexane was added, the mixture was stirred for 10 minutes to precipitate crystals, and then the crystals were collected by suction filtration.

The collected crystals were dried under a reduced pressure for 6 hours, and 20 mg of the obtained crystals were dissolved in 0.7 mL of deuterated chloroform. The amount of the unreacted $(HO-PEG)_2-O-CH_2-C_6H_5$ was checked by $^1H$-NMR analysis under the same measurement conditions as in Comparative Example 1, and it was found that the reaction was complete.

It was found by the analysis over 17 hours after sampling the reaction solution that the amount of the unreacted $(HO-PEG)_2-O-CH_2-C_6H_5$ was 0.2% or less. Then, according to Example 16-4 in Patent Literature 1, washing with water, dehydration, and crystallization were carried out for 6 hours, followed by drying under a reduced pressure for 8 hours, and the $(PEG)_2-O-CH_2-C_6H_5$ was obtained in a total production time of 40 hours.

That is, compared to Example 6, the production time was 14 hours longer.

From the above, it is indicated that the present invention can sufficiently shorten the production time compared to the related-art method.

## INDUSTRIAL APPLICABILITY

According to the present invention, in the production of obtaining a high molecular weight polyoxyethylene derivative by derivatizing a hydroxy group using a high molecular weight polyoxyethylene compound having a hydroxy group as a raw material, the time required for process analysis can be shortened and the total production time can be shortened.

Although the present invention has been described in detail and with reference to specific embodiments, it will be apparent to those skilled in the art that various changes and modifications can be made without departing from the spirit and scope of the present invention.

The present application is based on a Japanese patent application (Japanese Patent Application No. 2022-35886) filed on March 9, 2022, the contents which are incorporated herein by reference.

## Claims

1. A method for producing a high molecular weight polyoxyethylene derivative having a derivatized hydroxy group by derivatizing a hydroxy group in a high molecular weight polyoxyethylene compound having the hydroxy group, the method comprising:

   labeling the high molecular weight polyoxyethylene compound having the hydroxy group, which is unreacted, using a labeling reagent in a deuterated solvent; and
   quantitating a labeled solution by a pre-saturation method and a proton nuclear magnetic resonance spectroscopy using inverse gated decoupling.

2. The method for producing a high molecular weight polyoxyethylene derivative having a derivatized hydroxy group according to claim 1, wherein the high molecular weight polyoxyethylene compound having the hydroxy group is represented by the following formula (1):

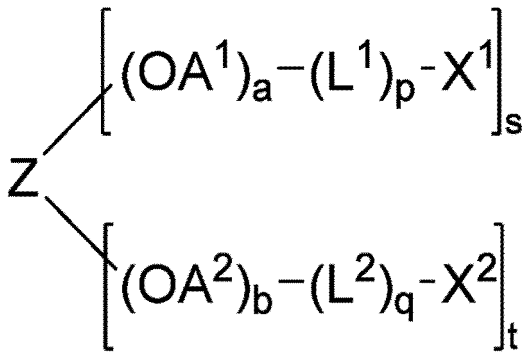

・・・(1)

wherein, in the formula (1),

$OA^1$ and $OA^2$ are an oxyethylene group,
a and b are each independently 0 to 2,500, and a+b is 200 or more,
$L^1$ and $L^2$ are each independently an alkylene group which may have a bond selected from an ester bond, a urethane bond, an amide bond, a urea bond, an ether bond, and a thioether bond in an alkylene chain or at an end thereof, and the alkylene groups may be same as or different from each other in one molecule,
p and q are each independently 0 or 1,
s and t are each independently 0 to 8, and $2 \leq s+t \leq 8$,
$X^1$ is a hydroxy group, an alkoxy group, an azide group, an oxycarbonyl group, an oxycarbonyloxy group, an oxycarbamoyl group, a cyano group, a silyl group, an acyloxy group, a sulfonyl group, or an imido group, and when t is 0, $X^1$ is a hydroxy group,
$X^2$ is a hydroxy group, and
Z is a residue obtained by removing all hydroxy groups from a compound having 2 to 8 hydroxy groups and 2 to 21 carbon atoms.

**3.** The method for producing a high molecular weight polyoxyethylene derivative having a derivatized hydroxy group according to claim 1 or 2, wherein the high molecular weight polyoxyethylene derivative having a derivatized hydroxy group is represented by the following formula (2):

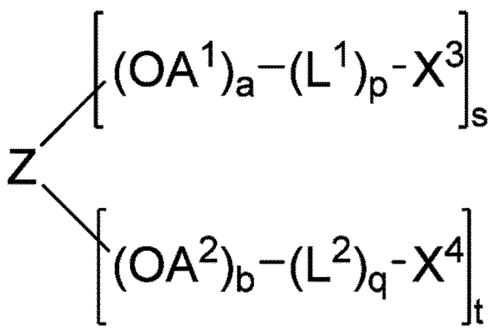

・・・(2)

wherein, in the formula (2),

$OA^1$ and $OA^2$ are an oxyethylene group,
a and b are each independently 0 to 2,500, and a+b is 200 or more,
$L^1$ and $L^2$ are each independently an alkylene group which may have a bond selected from an ester bond, a urethane bond, an amide bond, a urea bond, an ether bond, and a thioether bond in an alkylene chain or at an end thereof, and the alkylene groups may be same as or different from each other in one molecule,
p and q are each independently 0 or 1,
s and t are each independently 0 to 8, and $2 \leq s+t \leq 8$,
$X^3$ and $X^4$ are each independently an alkoxy group, an azide group, an oxycarbonyl group, an oxycarbonyloxy group, an oxycarbamoyl group, a cyano group, a silyl group, an acyloxy group, a sulfonyl group, or an imido group, and

Z is a residue obtained by removing all hydroxy groups from a compound having 2 to 8 hydroxy groups and 2 to 21 carbon atoms.

4. The method for producing a high molecular weight polyoxyethylene derivative having a derivatized hydroxy group according to any one of claims 1 to 3, wherein the labeling reagent is an isocyanate reagent represented by the following formula (3):

$$R\text{-}N{=}C{=}O \qquad (3)$$

wherein, in the formula (3), R represents an organic group having an electron-withdrawing group.

5. A labeling reagent for analysis use for a high molecular weight polyoxyethylene compound having a hydroxy group, which is represented by a formula (3):

$$R\text{-}N{=}C{=}O \qquad (3)$$

wherein, in the formula (3), R represents an organic group having an electron-withdrawing group.

6. A method for quantitating a high molecular weight polyoxyethylene compound having a hydroxy group contained in a high molecular weight polyoxyethylene derivative, the method comprising:

labeling the high molecular weight polyoxyethylene compound having a hydroxy group using a labeling reagent in a deuterated solvent; and
quantitating a labeled solution by a pre-saturation method and a proton nuclear magnetic resonance spectroscopy using inverse gated decoupling.

## INTERNATIONAL SEARCH REPORT

International application No.
**PCT/JP2023/008303**

**A. CLASSIFICATION OF SUBJECT MATTER**

***C08G 65/333***(2006.01)i
FI: C08G65/333

According to International Patent Classification (IPC) or to both national classification and IPC

**B. FIELDS SEARCHED**

Minimum documentation searched (classification system followed by classification symbols)

C08G65/00-67/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2019-172993 A (NOF CORP) 10 October 2019 (2019-10-10) paragraphs [0069], [0075], [0080], [0085], [0105], [0110], [0115] | 5 |
| A | | 1-4, 6 |
| X | POSTMA, Almar et al. A simple method for determining protic end-groups of synthetic polymers by 1H NMR spectroscopy. Polymer. 08 March 2006, vol. 47, no. 6, pp. 1899-1911, ISSN 0032-3861 in particular, abstract, pp. 1907-1909 | 5 |
| A | | 1-4, 6 |
| A | JP 2004-197077 A (NOF CORP) 15 July 2004 (2004-07-15) claims | 1-6 |
| A | JP 2005-208050 A (NOF CORP) 04 August 2005 (2005-08-04) claims | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2023** | **23 May 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/008303**

| Patent document cited in search report | Publication date (day/month/year) | Patent family member(s) | Publication date (day/month/year) |
| --- | --- | --- | --- |
| JP 2019-172993 A | 10 October 2019 | US 2021/0009756 A1<br>paragraphs [0090], [0102], [0120], [0138], [0193], [0210], [0227]<br>WO 2019/189188 A1<br>EP 3778703 A1<br>CN 111936549 A<br>KR 10-2020-0138244 A<br>CA 3095299 A | |
| JP 2004-197077 A | 15 July 2004 | US 2005/0058620 A1<br>claims<br>US 2005/0288490 A1<br>US 2006/0073113 A1<br>US 2006/0115450 A1<br>US 2009/0192320 A1<br>US 2011/0082277 A1<br>WO 2004/046222 A1<br>JP 2009-102649 A<br>EP 1564236 A1<br>EP 1911788 A1<br>EP 1911789 A1<br>CN 1714116 A<br>KR 10-2005-0083923 A | |
| JP 2005-208050 A | 04 August 2005 | US 2005/0208671 A1<br>claims | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4412461 B
- JP 2022035886 A


### Non-patent literature cited in the description


- **ALMAR POSTMA**. A simple method for determining protic end-groups of synthetic polymers by 1H NMR spectroscopy. *Polymer*, 2006, vol. 47, 1899-1911